# EUROPÄISCHE PATENTSCHRIFT

(11) **EP 1 375 310 B1**
(45) Veröffentlichungstag und Bekanntmachung des Hinweises auf die Patenterteilung: **14.11.2007**
(21) Anmeldenummer: 03007186.4
(22) Anmeldetag: 29.03.2003
(51) Int. Cl.: B62D 29/04, B62D 25/20, B62D 25/08, B62D 25/04, B62D 21/16

(54) **Aufbaustruktur für ein Fahrzeug, insbesondere einen Personenkraftwagen**
Body structure for a vehicle, especially for a car
Structure de carosserie pour un véhicule, en particulier pour une automobile

(30) Priorität: 29.06.2002 DE 10229401
(43) Veröffentlichungstag der Anmeldung: 02.01.2004
(73) Patentinhaber: Dr.Ing. h.c. F. Porsche Aktiengesellschaft, 70435 Stuttgart (DE)
(72) Erfinder: Steinhauser, Dieter, 73630 Remshalden (DE); Goehrke, Martin, 74369 Löchgau (DE); Meier, Thomas, 76287 Rheinstetten (DE); Moloney, Liam, 71229 Leonberg (DE)

(56) Entgegenhaltungen:
- EP-A- 0 523 850
- WO-A-03/055715
- DE-A- 3 139 458
- FR-A- 1 472 560
- US-A- 3 550 948
- PATENT ABSTRACTS OF JAPAN Bd. 0091, Nr. 98 (M-404), 15. August 1985 (1985-08-15) & JP 60 061237 A (YAMAHA HATSUDOKI KK), 9. April 1985 (1985-04-09)

## Beschreibung

Die Erfindung betrifft eine Aufbaustruktur für ein Fahrzeug, insbesondere einen Personenkraftwagen nach dem Oberbegriff des Patentanspruchs 1.

Es ist ein einachsiges Fahrzeug bekannt, WO 96/00667, das als ein leichtgewichtiger Anhänger ausgebildet ist und einen von Rädern getragenen aus im wesentlichen nicht metallischem Werkstoff hergestellten Grundrahmen umfasst. Aus vergleichbarem Werkstoff besteht ein Aufbau des Fahrzeugs, der von seitlichen hohlen Längsträgern des Grundrahmens aufgenommen wird.

Die WO 03/055715 A1 offenbart eine Sicherheitszelle mit einem Sitzbereich und einem Fußbereich. Dies Sicherheitszelle wird aus langfaserigen Kohlestofffasern mit laminarer Struktur in Kombination mit Aluminium und/oder einer Aluminiumwabenstruktur hergestellt.

Die EP 0 286 058 A2 befasst sich mit einem selbsttragenden Strukturelement aus Verbundwerkstoff für einen Fahrzeugaufbau, das durch ein Wandteil gebildet wird. Das Wandteil weist einen Zwischenkörper auf, der von Deckschichten begrenzt wird. Dieses Strukturelement soll ein gutes Festigkeits/Gewichts-Verhältnis aufweisen.

Aus der US 3,145,000 geht ein hochfestes glasfaserverstärktes Bauteil für eine Tragfläche eines Flugkörpers hervor, welche Tragfläche mit einem Wandabschnitt versehen ist, der einen in Deckwände eingebetteten Kern, bspw. aus einer Honigwabenstruktur, besitzt.

Die DE 31 39 458 A1 beschreibt, gemäß dem Oberbegriff des Anspruchs 1, eine Kleinkraftfahrzeugkarosserie, die eine Aufbaustruktur mit einem Wandgebilde aus nichtmetallischen Werkstoff umfasst, wobei die Aufbaustruktur eine Fahrgastzelle bildet, deren Wandgebilde eine vordere Wandstruktur und eine hintere Wandstruktur aufweist, die mit einer Bodenstruktur verbunden sind, wobei die Bodenstruktur von sich zwischen den Wandstrukturen erstreckenden Längsträgern begrenzt ist. Beispielsweise aus der EP 0 523 850 A2, der US 3,550,948, der JP 60061237 bzw. der FR 1 472 560 sind ähnliche Aufbaustrukturen für Kleinfahrzeuge bzw. Fahrzeuge bekannt.

Aufgabe der Erfindung ist es eine Aufbaustruktur für eine Fahrzeug, insbesondere einen Personenkraftwagen zu schaffen, die bei hoher Festigkeit und niederem Gewicht aus nicht metallischem Werkstoff besteht und sich durch funktionale Konstruktion auszeichnet.

Erfindungsgemäß wird diese Aufgabe durch die Merkmale des Patentanspruchs 1 gelöst. Weitere, die Erfindung ausgestaltende Merkmale sind in den Unteransprüchen enthalten. Die mit der Erfindung hauptsächlich erzielten Vorteile sind darin zu sehen, dass die durch eine Fahrgastzelle gebildete Aufbaustruktur, weil aus hochfestem nicht metallischem Werkstoff z.B. glasfaserverstärktem Kunststoff, vorzugsweise CFK bestehend, in Richtung geringes Gewicht und hohe Festigkeit optimiert ist. Dabei sind eine vordere Wandstruktur, eine hintere Wandstruktur, eine Bodenstruktur, Längsträger und ein Mitteltunnel in die Fahrgastzelle integriert, wodurch sich eine funktionale Konstruktion ergibt, will heißen, die Fahrgastzelle bietet nicht nur Insassen angemessenen Raum, sondern ermöglicht auch, dass weitere Aufbauabschnitte wie Vorderwagen und Hinterwagen des Personenkraftwagens auf einfache Weise angebaut werde können.

Oberhalb der vorderen Wandstruktur ist ein bspw. ebenfalls nicht metallischer, jedoch hochfester Windschutzscheibenrahmen angebracht, der mit Flanschen versehen ist. Mit diesen Flanschen ist der Windschutzscheibenrahmen an dem ersten Wandabschnitt und dem zweiten Wandabschnitt der vorderen Wandstruktur gehalten, und zwar unter Vermittlung von Klebungen. In den Hohlräumen der Säulen des Windschutzscheibenrahmens sind Stützsäulen vorgesehen, die mit der vorderen Wandstruktur verbunden sind. Diese Stützsäulen unterstützen in Verbindung mit den Säulen des Windschutzscheibenrahmens den Schutz der Insassen. Zur Verbindung der aus Metall bestehenden Stützsäulen dienen mit letzteren verbundene Halteplatten, die sich an der vorderen Wandstruktur abstützen, wobei die Halteplatten unter Vermittlung von Schrauben an besagter Wandstruktur gehalten sind.

Darüber hinaus sind die hintere Wandstruktur der Fahrgastzelle und eine bspw. nicht metallische Rollbügeleinrichtung baulich vereinigt, was zum einen zur konstruktiven, einschließlich räumlichen Übersichtlichkeit beiträgt und zum anderen die Sicherheitsfunktion der Rollbügeleinrichtung optimiert. Hinzu kommt dass die Verwendung von nicht metallischen Werkstoffen, vorzugsweise Verbundwerkstoffen - CFK - für die Fahrgastzelle und die Rollbügeleinrichtung sowie die Verbindung von letzteren eine Vereinfachung der Produktion darstellt. Schließlich besteht die Möglichkeit die Rollbügeleinrichtung durch zwei Einzelrollbügel im Bereich von Insassensitzen darzustellen, wodurch eine kompakte und die freie Gestaltung fördernde Konzeption geschaffen ist.

In der Zeichnung wird ein Ausführungsbeispiel der Erfindung gezeigt, das nachstehend näher beschrieben ist.

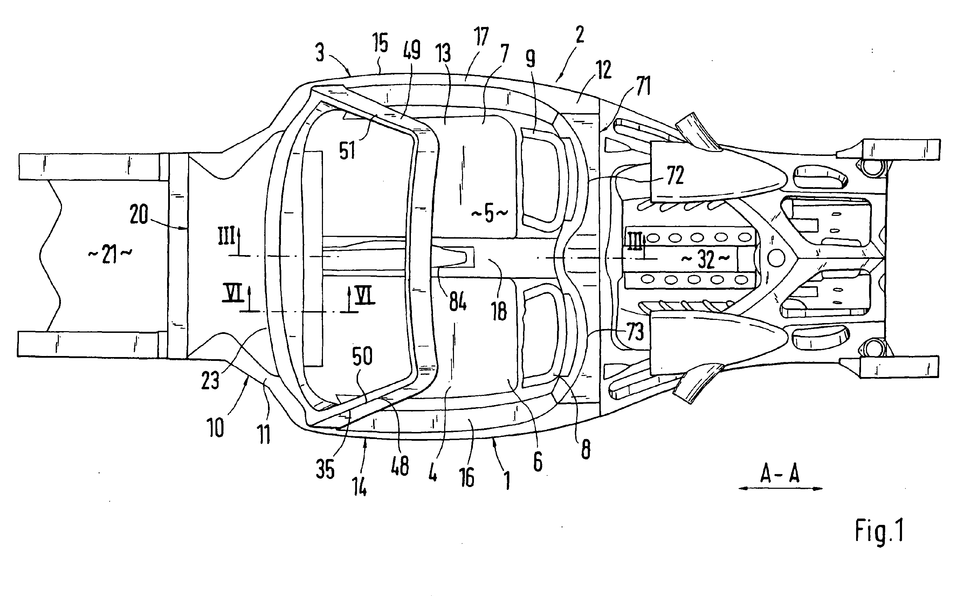

Es zeigen
- Fig. 1: eine Ansicht von oben auf einen Personenkraftwagen mit der Aufbaustruktur nach der Erfindung,

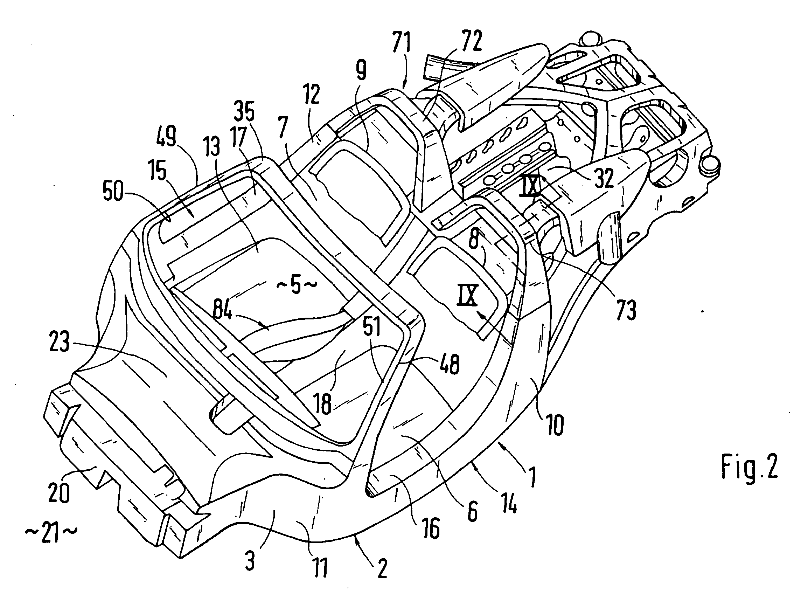

- Fig. 2: eine Schrägansicht von oben auf die Aufbaustruktur des Personenkraftwagens,
- Fig. 3: einen schematischen Schnitt nach der Linie lll-lll der Fig.1 in größerem Maßstab,
- Fig. 4: einen Schnitt nach der Linie IV-IV der Fig. 3,
- Fig. 5: einen Schnitt nach der Linie V-V der Fig. 3,
- Fig. 6: einen Schnitt nach der Linie VI-VI der Fig.1 in größerem Maßstab,
- Fig. 7: eine Schrägansicht auf eine Säule eines Windschutzscheibenrahmens der Aufbaustruktur,

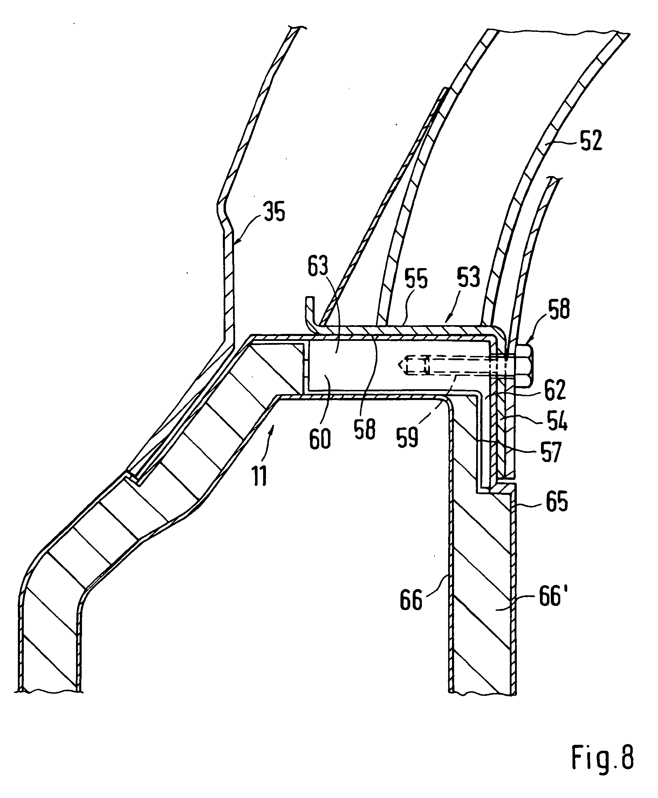

- Fig. 8: einen Schnitt nach der Linie VIII-VIII der Fig. 6,

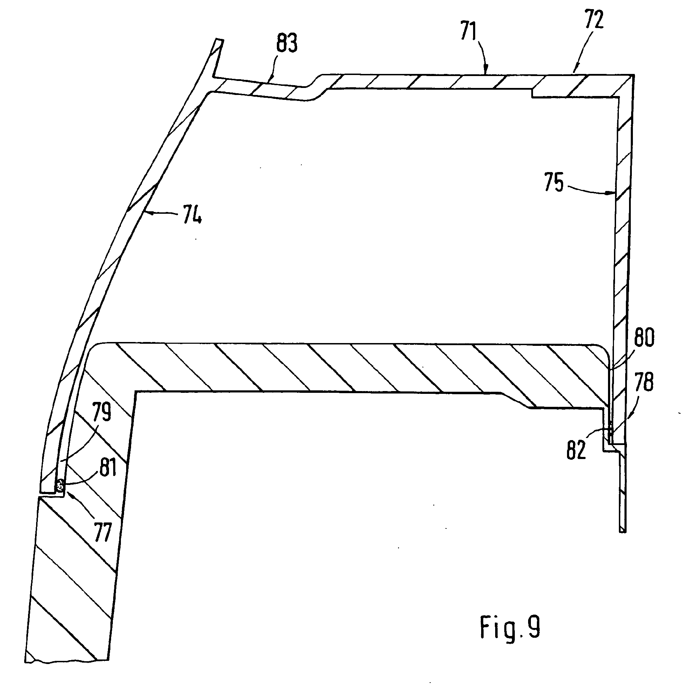

- Fig. 9: einen Schnitt nach der Linie IX-IX der Fig.1.

Von einem Personenkraftwagen 1 der offenen Bauart ist im wesentlichen nur ein Aufbau 2 dargestellt, der eine Aufbaustruktur 3 umfasst. Die Aufbaustruktur 3 umfasst eine Fahrgastzelle 4 mit einem Fahrgastraum 5, der Aufnahmen 6 und 7 für zwei nebeneinander angeordnete Fahrzeugsitze 8 und 9 aufweist. Die Fahrgastzelle 4 besteht aus hochfestem nicht metallischem Werkstoff bspw. faserverstärktem Kunststoff - Verbundwerkstoff CFK - und besitzt ein Wandgebilde 10 mit einer vorderen Wandstruktur 11 und einer hinteren Wandstruktur 12, die an eine Bodenstruktur 13 angegliedert ist. Die Bodenstruktur 13 wird an Längsseiten 14,15 von sich zwischen den Wandstrukturen 11 und 12 erstreckenden im Querschnitt kastenförmigen Längsträgern 16,17 begrenzt, und sie weist einen Mitteltunnel 18 auf, der zwischen der vorderen Wandstruktur 11 und der hinteren Wandstruktur 12 verläuft; die Längsträger 16,17 und der Mitteltunnel 18 erstrecken sich in Fahrzeuglängsrichtung A-A.

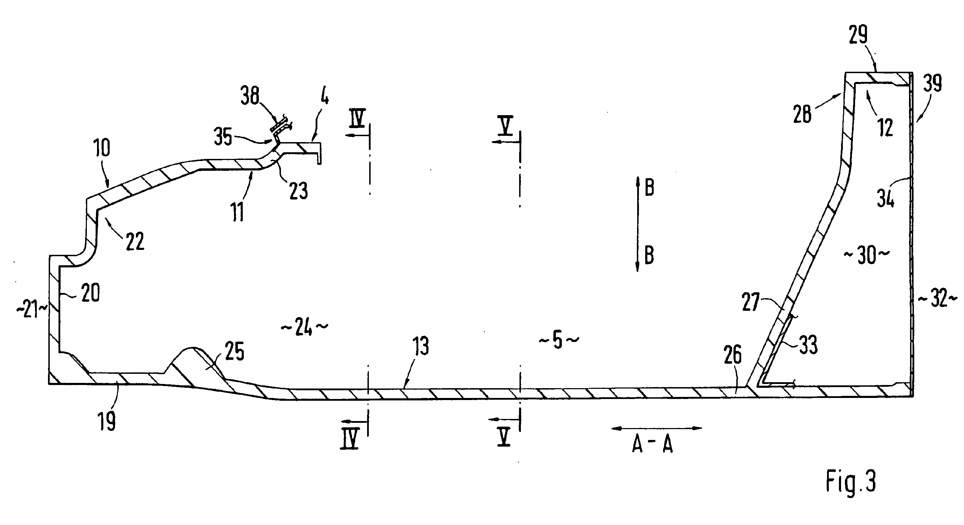

Die vordere Wandstruktur 11 - Fig. 3 - weist einen von einem ersten Bodenabschnitt 19 der Bodenstruktur 13 in Fahrzeughochrichtung B-B geführten ersten Wandabschnitt 20 auf, der einen Bugraum 21 begrenzt. Von einem oberen Ende 22 des ersten Wandabschnitts 20 aus erstreckt sich ein zweiter Wandabschnitt 23 entgegen der Fahrtrichtung C. Der erste Bodenabschnitt 19, der erste Wandabschnitt 21 und der zweite Wandabschnitt 23 begrenzen einen Fußraum 24 der Fahrgastzelle 4. Darüber hinaus ist der erste Bodenabschnitt 19 der Bodenstruktur 13 im Bereich des Fußraums 24 mit einer örtlichen Verdickung 25 versehen, die zur Lagerung von nicht gezeigten Fahrpedalen dient.

Die hintere Wandstruktur 12 weist einen von einem hinteren Bodenabschnitt 26 der Bodenstruktur 13 aus in Fahrzeughochrichtung B-B geführten dritten Wandabschnitt 27 auf, wobei an einem oberen Ende 28 des dritten Wandabschnitts 27 ein vierter Wandabschnitt 29 angeschlossen ist, der entgegen der Fahrtrichtung C ausgerichtet ist. Der hintere Bodenabschnitt 27, der dritte Wandabschnitt 27 und der vierte Wandabschnitt 29 begrenzen einen Hohlraum 30 mit einer offenen Seite 31, die zu einem Aggregateraum 32 hin ausgerichtet ist. Der Hohlraum 30 ist zur Unterbringung eines Behälters 33 für Betriebsstoffe des Personenkraftwagens ausgebildet und auf der offenen Seite 31 mittels einer aufrechten Wand 34 verschließbar.

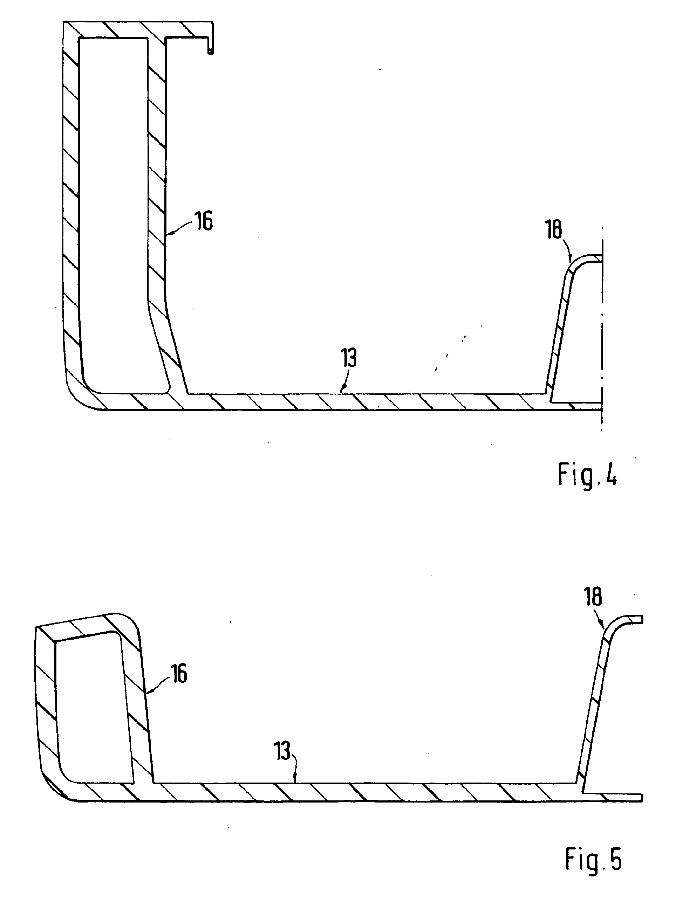

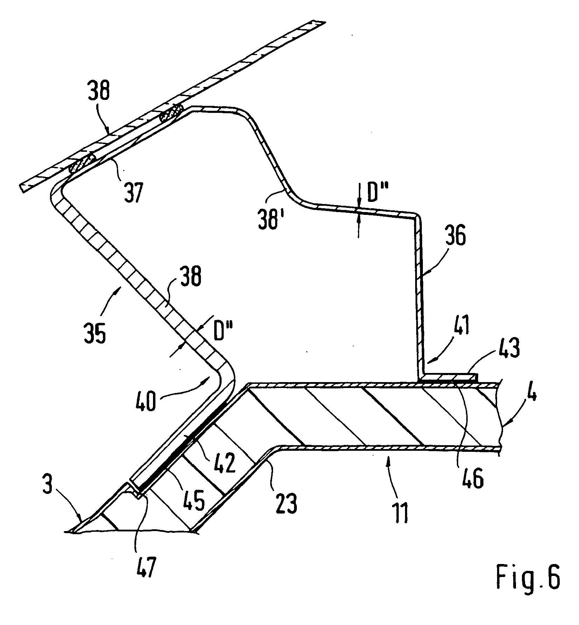

Gemäß Fig. 6 sind die vordere Wandstruktur 11 und ein bspw. nicht metallischer Windschutzscheibenrahmen 35 baulich vereinigt; der Windschutzscheibenrahmen 35 kann wie die übrige Aufbaustruktur 3 bzw. Fahrgastzelle und in der EP 0 286 058 A1 beschrieben aus hochfestem faserverstärktem Kunststoff - CFK - bestehen. Dabei ist der Windschutzscheibenrahmen 35 als Hohlträger 36 ausgeführt, der eine Auflagewand 37 für eine Windschutzscheibe 38 umfasst, welche Auflagewand 37 mit Stützwänden 38,38' versehen ist, deren freie Enden 40,41 mit Flanschen 42,43 versehen sind. Die Flansche 43,44 sind an den ersten Wandabschnitt 20 und den zweiten Wandabschnitt 21 herangeführt und durch Klebungen 45,46 in Lage gehalten. Zur bündigen Aufnahme der des Flansches 43 am zweiten Wandabschnitt 23 ist letzterer mit einer Ausnehmung 47 ausgestattet.

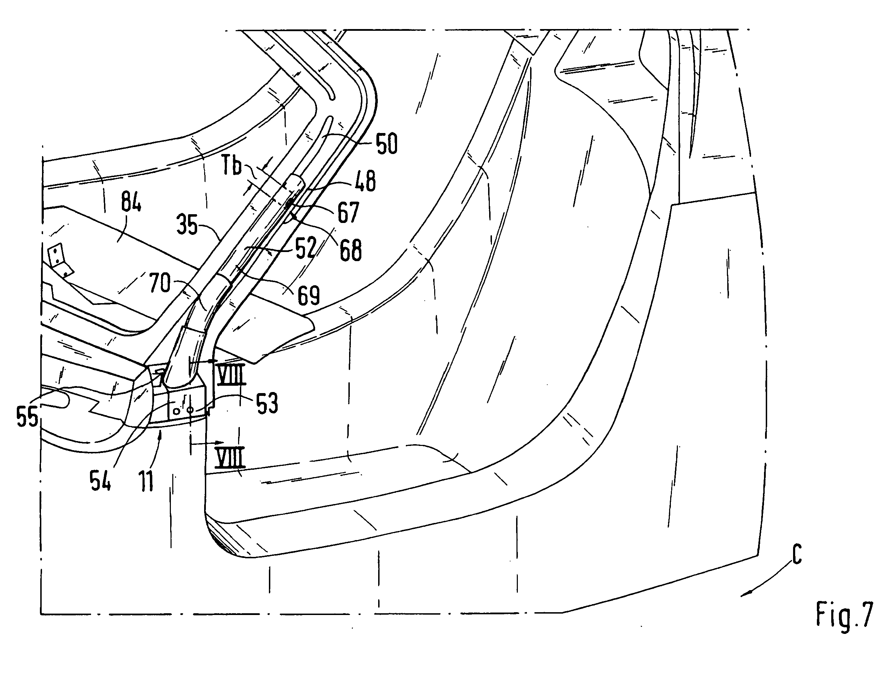

Der Windschutzscheibenrahmen 35 weist aufrechte Säulen 48,49, sogenannte A-Säulen, auf, die mit Hohlräumen 50,51 versehen sind, in denen Stützsäulen 52 - Fig. 7 - sich erstrecken. Jede Stützsäule 52 besteht aus Metall und ist mit der vorderen Wandstruktur 11 verbunden. Dabei ist die Stützsäule 52 unter Vermittlung einer Halteplatte 53 an besagter Wandstruktur in Lage gehalten, welche Halteplatte 53 im Winkel zueinander verlaufende Schenkel 54,55 besitzt. Die Schenkel 54,55 liegen an korrespondierenden Wandbereichen 56,57 der vorderen Wandstruktur 11 an, und die Halteplatte 53 ist unter Vermittlung von Schrauben 58 befestigt, die mit Gewindebohrungen 59 eines metallischen Einsatzes 60 zusammenarbeiten. Der winkelförmige Schenkel 62,63 aufweisende Einsatz 60 ist in vordere Wandstruktur 11 integriert, dergestalt, dass dieser Einsatz 60 von Begrenzungswänden 65,66 verkleidet ist, die außerhalb des Einsatzes 60 einen Kern 66' umgeben; eine diesbezügliche Ausführung ist der bereits genannten EP 0 286 058 A1 zu entnehmen. Zwischen der Stützsäule 52 und der Säule 48 ist ein Schaumstoffkörper 67 vorgesehen, der sich lediglich über eine relativ kleinen Teilbereich Tb eines freien Endes 68 der Stützsäule 52 erstreckt. Außerdem besteht die Stützsäule 52 aus wenigstens zwei ineinander geschobene Rohre 69,70, die im Ausführungsbeispiel einen kreisförmigen Querschnitt aufweisen.

Mit der hinteren Wandstruktur 12 ist eine Rollbügelvorrichtung 71 baulich vereinigt, die aus nicht metallischem Werkstoff hergestellt ist, wofür sich Faserverbundwerkstoff bspw. CFK eignet. Die Rollbügelvorrichtung 71 wird durch zwei Einzelrollbügel 72,73 gebildet, die im Bereich der Aufnahmen 6,7 der Fahrzeugsitze 8,9 an der hinteren Wandstruktur 12 angebracht sind. Jeder Einzelrollbügel z.B. 72 umfasst - im Schnitt gesehen - aufrechte und in Fahrzeuglängsrichtung A-A beabstandete Schenkelwände 74,75, zwischen denen sich eine Stegwand 76 erstreckt. Die Schenkelwände 74,75 sind mit freien Enden 77,78 an die hintere Wandstruktur 12 herangeführt und ruhen in Ausnehmungen 79,80 der zuletzt genannten Wandstruktur, und zwar unter Vermittlung von Klebungen 81,82. Die Stegwand 76 ist zur Auflage eines Daches ausgebildet und weist eine Rinne 83 auf, in die eine Dichtkörper einsetzbar ist; der Dichtkörper ist zwischen dem Einzelrollbügel 72 und dem Dach wirksam. Schließlich gibt die Fig. 7 wieder, dass die vordere Wandstruktur 12 gegenüber dem Mitteltunnel 18 mittels einer in Fahrzeuglängsrichtung A-A verlaufenden Tragstrebe 84 abgestützt ist, die mit einem in Fahrtrichtung C ansteigenden Verlauf versehen ist. Die Tragstrebe 84 ist durch Schrauben, Kleben oder dergl. mit dem Mitteltunnel 18 bzw. der vorderen Wandstruktur 12 verbunden.

## Patentansprüche

1. Aufbaustruktur für ein Fahrzeug, insbesondere einen Personenkraftwagen, die ein Wandgebilde aus nicht metallischem Werkstoff bspw. faserverstärktem Kunststoff umfasst, wobei
- die Aufbaustruktur (3) eine Fahrgastzelle (4) bildet, deren Wandgebilde (10) eine vordere Wandstruktur (11) und eine hintere Wandstruktur (12) aufweist, wobei die Wandstrukturen (11 und 12) mit einer Bodenstruktur (13) verbunden sind, die von sich zwischen den Wandstrukturen (11 und 12) erstreckenden Längsträgern (16,17) begrenzt ist, und
- die vorderen Wandstruktur (11) und ein bspw. nicht metallischer Windschutzscheibenrahmen (35) baulich vereinigt sind,
**dadurch gekennzeichnet, dass**
- die vordere Wandstruktur (11) einen von einem ersten Bodenabschnitt (19) der Bodenstruktur (13) in Fahrzeughochrichtung (B-B) nach oben geführten ersten Wandabschnitt (20) und einen zweiten entgegen einer Fahrtrichtung (C) verlaufenden Wandabschnitt (23) aufweist, und
- der erste Bodenabschnitt (19), der erste Wandabschnitt (20) und der zweite Wandabschnitt (23) eine Art Fußraum (24) in einem Fahrgastraum (5) der Fahrgastzelle (4) begrenzen.

2. Aufbaustruktur nach Anspruch 1, **dadurch gekennzeichnet, dass** zwischen den Wandstrukturen (11 und 12) ein Mitteltunnel (18) verläuft.

3. Aufbaustruktur nach Anspruch 1, **dadurch gekennzeichnet, dass** die hintere Wandstruktur (12) einen von einem zweiten Bodenabschnitt (26) der Bodenstruktur (13) in Fahrzeughochrichtung (B-B) nach oben geführten dritten Wandabschnitt (27) und eine vierten entgegen der Fahrtrichtung (C) verlaufenden Wandabschnitt (29) aufweist.

4. Aufbaustruktur nach Anspruch 3, **dadurch gekennzeichnet, dass** der zweite Bodenabschnitt (26), der dritte Wandabschnitt (27) und der vierte Wandabschnitt (29) einen Hohlraum (30) mit einer offenen Seite (31) begrenzen.

5. Aufbaustruktur nach Anspruch 4, **dadurch gekennzeichnet, dass** der Hohlraum (30) mittels einer aufrechten Wand (34) verschließbar und bspw. zur Unterbringung eines Behälters (33) für Betriebsstoffe des Personenkraftwagens ausgebildet ist.

6. Aufbaustruktur nach einem oder mehreren der vorangehenden Ansprüche, **dadurch gekennzeichnet, dass** die Bodenstruktur (13) im Bereich des Fußraums (24) mit einer örtlichen Verdickung (25) zur Lagerung von Fahrpedalen versehen ist.

7. Aufbaustruktur nach Anspruch 1, **dadurch gekennzeichnet, dass** der Windschutzscheibenrahmen (35) mit Flanschen (42,43) versehen ist, die mittels Klebungen (45,46) an dem ersten Wandabschnitt (20) und an dem zweiten Wandabschnitt (23) in Lage gehalten sind.

8. Aufbaustruktur nach Anspruch 1, **dadurch gekennzeichnet, dass** in Hohlräumen (50,51) von Säulen (48,49) des Windschutzscheiberahmens (35) zusätzliche bspw. aus Metall bestehende Stützsäulen (52) vorgesehen sind, die mit der vorderen Wandstruktur (11) verbunden sind.

9. Aufbaustruktur nach Anspruch 8, **dadurch gekennzeichnet, dass** jede Stützsäule (52) unter Vermittlung einer Halteplatte (53) an der vorderen Wandstruktur (11) in Lage gehalten ist.

10. Aufbaustruktur nach Anspruch 9, **dadurch gekennzeichnet, dass** die Halteplatte (53) im Winkel zueinander verlaufende Schenkel (54,55) aufweist, die an korrespondierenden Wandbereichen (56,57) der vorderen Wandstruktur (11) anliegen.

11. Aufbaustruktur nach Anspruch 10, **dadurch gekennzeichnet, dass** die Halteplatte (53) unter Vermittlung von Schrauben (58) in Lage gehalten ist, die mit Gewindebohrungen (59) eines bspw. metallischen in die vordere Wandstruktur (11) integrierten Einsatzes (60) zusammenwirken.

12. Aufbaustruktur nach den Ansprüchen 8 und 9, **dadurch gekennzeichnet, dass** die Stützsäulen (52) lediglich im Bereich freier Enden (68) unter Vermittlung eines Schaumstoffkörpers (67) mit den Säulen (48,49) des Windschutzscheibenrahmens (35) verbunden sind.

13. Aufbaustruktur nach den Ansprüchen 8 und 9, **dadurch gekennzeichnet, dass** jede Stützsäule (52) wenigstens zwei ineinander geschobene Rohre (69,70) aufweist.

14. Aufbaustruktur nach Anspruch 1, **dadurch gekennzeichnet, dass** die hintere Wandstruktur (12) und eine bspw. nicht metallische Rollbügelvorrichtung (71) baulich vereinigt sind.

15. Aufbaustruktur nach Anspruch 14, **dadurch gekennzeichnet, dass** die Rollbügelvorrichtung (71) zwei im Bereich von Aufnahmen (6,7) für Fahrgastsitze (8,9) angebrachten Einzelrollbügel (72,73) umfasst.

16. Aufbaustruktur nach den Ansprüchen 14 und 15, **dadurch gekennzeichnet, dass** jeder Einzelrollbügel (z.B.) - im Querschnitt gesehen - aufrechte Schenkelwände (74,75) umfasst, zwischen denen sich eine Stegwand (76) erstreckt.

17. Aufbaustruktur nach Anspruch 16, **dadurch gekennzeichnet, dass** freie Enden (77,78) der Schenkelwände (74,75) in Ausnehmungen (79,80) der hinteren Wandstruktur (12) ruhen und mittels Klebungen (81,82) in Lage gehalten werden.

18. Aufbaustruktur nach Anspruch 16, **dadurch gekennzeichnet, dass** die Stegwand (76) zur Auflage eines Daches ausgebildet und mit einer Rinne (83) zur Aufnahme eines Dichtkörpers versehen ist.

19. Aufbaustruktur nach den Ansprüchen 1 und 2, **dadurch gekennzeichnet, dass** die vordere Wandstruktur (11) gegenüber dem Mitteltunnel (18) mittels einer Tragstrebe (84) abgestützt ist.

20. Aufbaustruktur nach Anspruch 19, **dadurch gekennzeichnet, dass** die Tragstrebe (84) durch Schrauben, Kleben oder dergl. mit den Mitteltunnel (18) bzw. der vorderen Wandstruktur (11) verbunden ist.

## Claims

1. A body structure for a vehicle, especially a passenger vehicle, the body structure comprising a wall formation made of a non-metallic material, for example fibre-reinforced plastics, wherein
- the body structure (3) forms a passenger cell (4), the wall formation (10) of which has a front wall structure (11) and a rear wall structure (12), wherein the wall structures (11 and 12) are connected to a floor structure (13) which is bounded by longitudinal members (16, 17) extending between the wall structures (11 and 12), and
- the front wall structure (11) and an e.g. non-metallic windscreen frame (35) are structurally joined,
**characterised in that**
- the front wall structure (11) has a first wall portion (20) extending upwards from a first floor portion (19) of the floor structure (13) in the vertical direction (B-B) of the vehicle, and a second wall portion (23) extending counter to a direction of travel (C), and
- the first floor portion (19), the first wall portion (20) and the second wall portion (23) define a type of footwell (24) in a passenger compartment (5) of the passenger cell (4).

2. A body structure according to claim 1, **characterised in that** a centre tunnel (18) extends between the wall structures (11 and 12).

3. A body structure according to claim 1, **characterised in that** the rear wall structure (12) has a third wall portion (27) extending upwards from a second floor portion (26) of the floor structure (13) in the vertical direction (B-B) of the vehicle, and a fourth wall portion (29) extending counter to the direction of travel (C).

4. A body structure according to claim 3, **characterised in that** the second floor portion (26), the third wall portion (27) and the fourth wall portion (29) define a cavity (30) with an open side (31).

5. A body structure according to claim 4, **characterised in that** the cavity (30) is closable by means of an upright wall (34) and is formed e.g. for accommodating a tank (33) for fuels for the passenger vehicle.

6. A body structure according to one or more of the preceding claims, **characterised in that** the floor structure (13) in the region of the footwell (24) is provided with a local thickening (25) for the mounting of operating pedals.

7. A body structure according to claim 1, **characterised in that** the windscreen frame (35) is provided with flanges (42, 43) which are held in position on the first wall portion (20) and the second wall portion (23) by means of glued connections (45, 46).

8. A body structure according to claim 1, **characterised in that** additional, e.g. metal supporting pillars (52) are provided in cavities (50, 51) of pillars (48, 49) of the windscreen frame (35) and are connected to the front wall structure (11).

9. A body structure according to claim 8, **characterised in that** each supporting pillar (52) is held in position on the front wall structure (11) by means of a holding plate (53).

10. A body structure according to claim 9, **characterised in that** the holding plate (53) has arms (54, 55) which extend at an angle to one another and rest against corresponding wall regions (56, 57) of the front wall structure (11).

11. A body structure according to claim 10, **characterised in that** the holding plate (53) is held in position by means of screws (58) which co-operate with threaded bores (59) in an e.g. metal insert (60) integrated into the front wall structure (11).

12. A body structure according to claims 8 and 9, **characterised in that** the supporting pillars (52) are connected to the pillars (48, 49) of the windscreen frame (35) by means of a foamed material body (67) only in the region of free ends (68).

13. A body structure according to claims 8 and 9, **characterised in that** each supporting pillar (52) has at least two tubes (69, 70) which are pushed into one another.

14. A body structure according to claim 1, **characterised in that** the rear wall structure (12) and an e.g. non-metallic roll-bar device (71) are structurally joined.

15. A body structure according to claim 14, **characterised in that** the roll-bar device (71) comprises two individual roll bars (72, 73) which are fixed in the region of mounts (6, 7) for passenger seats (8, 9).

16. A body structure according to claims 14 and 15, **characterised in that** each individual roll bar (e.g.) - seen in cross-section - comprises upright side walls (74, 75), between which a connecting wall (76) extends.

17. A body structure according to claim 16, **characterised in that** free ends (77, 78) of the side walls (74, 75) rest in recesses (79, 80) in the rear wall structure (12) and are held in position by means of glued connections (81, 82).

18. A body structure according to claim 16, **characterised in that** the connecting wall (76) is formed for supporting a roof and is provided with a groove (83) for receiving a sealing member.

19. A body structure according to claims 1 and 2, **characterised in that** the front wall structure (11) is supported in relation to the centre tunnel (18) by means of a supporting strut (84).

20. A body structure according to claim 19, **characterised in that** the supporting strut (84) is connected to the centre tunnel (18) and the front wall structure (11) by screws, gluing or the like.

## Revendications

1. Structure de carrosserie pour un véhicule automobile, en particulier un véhicule de tourisme, qui comporte un ensemble de parois réalisé dans un matériau non métallique, tel qu'une matière plastique renforcée par des fibres, sachant que
- la structure de carrosserie (3) forme une cellule intérieure du véhicule (4), dont l'ensemble de parois (10) comporte une structure de paroi avant (11) et une structure de paroi arrière (12), les structures de paroi (11 et 12) étant assemblées à une structure de plancher (13) qui est délimitée par des longerons (16, 17) qui s'étendent entre les structures de paroi (11 et 12), et
- la structure de paroi avant (11) et un cadre de pare-brise (35), en matériau non métallique par exemple, sont assemblés l'un à l'autre,
**caractérisée en ce que**
- la structure de paroi avant (11) comporte une première partie de paroi (20), qui s'étend depuis une première partie de plancher (19) de la structure de plancher (13) dans le sens vertical (B-B) du véhicule, et une deuxième partie de paroi (23) qui s'étend dans le sens opposé au sens de déplacement (C) du véhicule, et
- la première partie de plancher (19), la première partie de paroi (20) et la deuxième partie de paroi (23) délimitent un espace pour pieds (24) dans un habitacle (5) de la cellule intérieure du véhicule (4).

2. Structure de carrosserie selon la revendication 1, **caractérisée en ce qu'**un tunnel central (18) s'étend entre les structures de paroi (11 et 12).

3. Structure de carrosserie selon la revendication 1, **caractérisée en ce que** la structure de paroi arrière (12) comporte une troisième partie de paroi (27), qui s'étend vers le haut dans le sens vertical (B-B) du véhicule à partir d'une deuxième partie de plancher (26) de la structure de plancher (13), et une quatrième partie de paroi (29), qui est orientée dans le sens opposé au sens de déplacement (C) du véhicule.

4. Structure de carrosserie selon la revendication 3, **caractérisée en ce que** la partie de plancher arrière (26), la troisième partie de paroi (27) et la quatrième partie de paroi (29) délimitent une cavité (30) avec un côté ouvert (31).

5. Structure de carrosserie selon la revendication 4, **caractérisée en ce que** la cavité (30) peut être fermée par une paroi verticale (34) et est réalisée, par exemple, pour y loger un réservoir (33) pour le carburant du véhicule de tourisme.

6. Structure de carrosserie selon une ou plusieurs des revendications précédentes, **caractérisée en ce que** la structure de plancher (13) est munie, dans la zone de l'espace pour pieds (24), d'un renflement (25) local, qui est destiné à former un point de montage pour des pédales du véhicule.

7. Structure de carrosserie selon la revendication 1, **caractérisée en ce que** le cadre de pare-brise (35) est muni de brides (42, 43), qui sont maintenues en position contre la première partie de paroi (20) et la deuxième partie de paroi (23) par des assemblages collés (45, 46).

8. Structure de carrosserie selon la revendication 1, **caractérisée en ce que** dans des cavités (50, 51) de montants (48, 49) du cadre de pare-brise (35) sont prévues des barres de support (52) supplémentaires, qui sont réalisées par exemple en métal et qui sont assemblées à la structure de paroi avant (11).

9. Structure de carrosserie selon la revendication 8, **caractérisée en ce que** chaque barre de support (52) est maintenue en position contre la structure de paroi avant (11) par l'intermédiaire d'une plaque de fixation (53).

10. Structure de carrosserie selon la revendication 9, **caractérisée en ce que** la plaque de fixation (53) comporte des branches (54, 55), qui sont agencées en angle l'une par rapport à l'autre et qui sont en appui contre des zones de paroi (56, 57) correspondantes de la structure de paroi avant (11).

11. Structure de carrosserie selon la revendication 10, **caractérisée en ce que** la plaque de fixation (53) est maintenue en position au moyen de vis (58), qui coopèrent avec des trous taraudés (59) d'un insert (60) métallique, par exemple, intégré dans la structure de paroi avant (11).

12. Structure de carrosserie selon les revendications 8 et 9, **caractérisée en ce que** les barres de support (52) sont assemblées aux montants (48, 49) du cadre de pare-brise (35) uniquement dans la zone d'extrémités libres (68) par l'intermédiaire d'un corps en mousse (67).

13. Structure de carrosserie selon les revendications 8 et 9, **caractérisée en ce que** chaque barre de support (52) comporte au moins deux tubes (69, 70) enfoncés l'un dans l'autre.

14. Structure de carrosserie selon la revendication 1, **caractérisée en ce que** la structure de paroi arrière (12) et un dispositif d'arceaux de sécurité (71) en matériau non métallique par exemple, sont assemblés l'un à l'autre.

15. Structure de carrosserie selon la revendication 14, **caractérisée en ce que** le dispositif d'arceaux de sécurité (71) comporte deux arceaux de sécurité individuels (72, 73), qui sont montés dans la zone des espaces de réception (6, 7) pour des sièges (8, 9) du véhicule.

16. Structure de carrosserie selon les revendications 14 et 15, **caractérisée en ce que** chaque arceau de sécurité individuel (par exemple) comporte - par référence à une coupe - des branches (74, 75) verticales entre lesquelles s'étend une traverse (76).

17. Structure de carrosserie selon la revendication 16, **caractérisée en ce que** des extrémités libres (77, 78) des branches (74, 75) reposent dans des évidements (79, 80) de la structure de paroi arrière (12) et sont maintenues en position par des assemblages collés (81, 82).

18. Structure de carrosserie selon la revendication 16, **caractérisée en ce que** la traverse (76) est réalisée pour servir d'appui à un pavillon et comporte une rainure (83), destinée à recevoir un corps d'étanchéité.

19. Structure de carrosserie selon les revendications 1 et 2, **caractérisée en ce que** la structure de paroi avant (11) est en appui par rapport au tunnel central (18) au moyen d'une entretoise (84).

20. Structure de carrosserie selon la revendication 19, **caractérisée en ce que** l'entretoise (84) est assemblée au tunnel central (18) ou à la structure de paroi avant (11) par l'intermédiaire de vis, par collage ou similaire.
